# EUROPÄISCHE PATENTSCHRIFT

(11) **EP 0 802 099 B1**
(45) Veröffentlichungstag und Bekanntmachung des Hinweises auf die Patenterteilung: **30.05.2001**
(21) Anmeldenummer: 97103707.2
(22) Anmeldetag: 06.03.1997
(51) Int. Cl.: B60T 13/08

(54) **Kombinierte Hand- und Auflaufbremse für Fahrzeuganhänger**
Combined hand and overrunning brake for trailers
Frein à main et frein à inertie combinés pour remorques

(30) Priorität: 18.04.1996 DE 19615225
(43) Veröffentlichungstag der Anmeldung: 22.10.1997
(73) Patentinhaber: BPW Bergische Achsen Kommanditgesellschaft, 51674 Wiehl (DE)
(72) Erfinder: Dowe, Günter, 51588 Nümbrecht (DE); Wasserfuhr, Wilfried, 51709 Marienheide (DE)
(74) Vertreter: Stenger, Watzke & Ring Patentanwälte

(56) Entgegenhaltungen:
- DE-U- 7 211 259
- DE-U- 7 334 809
- DE-U- 7 411 773

## Beschreibung

Die Erfindung betrifft eine Zugeinrichtung für Fahrzeuganhänger mit einer Auflaufbremseinrichtung, die bei einer Relativbewegung zwischen einer mit der Kugelkupplung verbundenen Zugstange und einer Zugdeichsel über einen Umlenkhebel auf ein Bremsgestänge wirkt, und mit einem unabhängig von der Auflaufbremseinrichtung wirkenden Handbremshebel, der über einen Mitnehmer auf den Umlenkhebel wirkt, wobei Umlenkhebel und Handbremshebel gemeinsam auf einem Lagerbolzen an der Zugdeichsel gelagert sind.

Derartige Zugeinrichtungen für Fahrzeuganhänger sind in verschiedenen Ausführungen bekannt. Da der Mitnehmer zwischen Handbremshebel und Umlenkhebel als unterhalb des gemeinsamen Lagerbolzens an einem der beiden Hebel ausgebildete Verlängerung ausgeführt ist, die seitlich abgebogen ist und mit einer entsprechenden Verlängerung des anderen Hebels zusammenwirkt, ergibt sich bei den bekannten Zugeinrichtungen nicht nur eine Verringerung der Bodenfreiheit, sondern auch die Notwendigkeit, durch eine zusätzliche Bodenstütze dafür Sorge zu tragen, daß bei einem Abstellen des von der Kupplungskugel des Zugfahrzeuges abgenommenen Fahrzeuganhängers und hierbei auf den Boden abgesenkter Zugdeichsel keine ungewollte Betätigung des Bremsgestänges, insbesondere kein Lösen des Handbremshebels eintreten kann.

Der Erfindung liegt die **Aufgabe** zugrunde, eine Zugeinrichtung de voranstehend beschriebenen Art für Fahrzeuganhänger derart weiterzuentwickeln, daß sich bei gleichzeitig vergrößerter Bodenfreiheit eine sichere Unterbringung der Verbindung zwischen Handbremshebel und Umlenkhebel ergibt.

Die **Lösung** dieser Aufgabenstellung wird durch die Erfindung gemäß Anspruch 1 gelöst.

Mit der erfindungsgemäßen Weiterbildung der bekannten Zugeinrichtung wird der Vorteil erreicht, daß einerseits eine Verringerung der Bodenfreiheit durch am Handbremshebel oder Umlenkhebel angeformte Mitnehmer vermieden wird und andererseits der Mitnehmer geschützt im Bereich einer gehäuseartigen Ausbildung der Zugdeichsel untergebracht werden kann, so daß auf zusätzliche Maßnahmen gegen eine ungewollte Betätigung des Bremsgestänges verzichtet werden kann.

Gemäß weiteren Merkmalen der Erfindung ist der Mitnehmer als separates Bauteil ausgebildet und der Lagerbolzen in einem gehäuseartig verlängerten Teil der Zugdeichsel angeordnet, der den Umlenkhebel und den Mitnehmer umschließt.

Auf der Zeichnung ist ein Ausführungsbeispiel der erfindungsgemäßen Zugeinrichtung dargestellt, und zwar zeigen:
- Fig. 1: einen Längsschnitt durch die Zugeinrichtung und
- Fig. 2: einen Querschnitt durch die Zugeinrichtung gemäß der Schnittlinie II-II in Fig. 1.

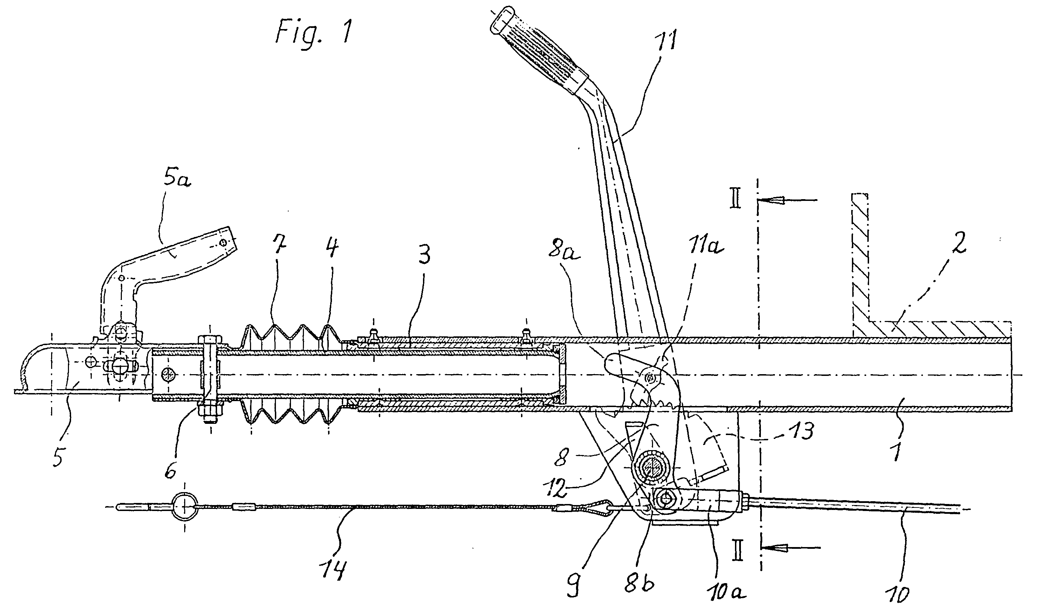

Das auf den Zeichnungen dargestellte Ausführungsbeispiel zeigt eine Zugeinrichtung mit einem Deichselrohr 1, das am Fahrgestell eines strichpunktiert angedeuteten Fahrzeuganhängers 2 befestigt ist und in seinem vorderen Teil ein Lagergehäuse 3 für eine Auflaufbremseinrichtung aufnimmt, die weiterhin eine Zugstange 4 umfaßt. Am vorderen Ende dieser Zugstange 4 ist eine Kugelkupplung 5 mittels eines Schraubenbolzens 6 befestigt, mit deren Hilfe der Fahrzeuganhänger 2 an einer nicht gezeichneten Kupplungskugel eines Zugfahrzeugs angekuppelt werden kann. Die Fig. 1 zeigt weiterhin einen Kupplungshebel 5a und einen Faltenbalg 7, der am Ende der Kugelkupplung 5 die Zugstange 4 gegenüber dem Lagergehäuse 3 bzw. dem Deichselrohr 1 abdichtet.

Bei einem Abbremsen des Zugfahrzeuges findet aufgrund der Massenträgheit des Fahrzeuganhängers 2 eine Relativbewegung zwischen dem im Deichselrohr 1 angeordneten Lagergehäuse 3 und der Zugstange 4 statt. Die Zugstange 4 verschiebt sich hierbei in Richtung auf den Fahrzeuganhänger 2 im Deichselrohr 1 und trifft mit ihrem hinteren Ende auf einen Umlenkhebel 8, dessen nach vorn gekrümmter oberer Hebelarm 8a innerhalb des Deichselrohres 1 angeordnet ist und der um einen unterhalb des Deichselrohres 1 angeordneten Lagerbolzen 9 verschwenkbar ist. Am unteren Hebelarm 8b des Umlenkhebels 8 ist mittels eines Kupplungsstückes 10a das vordere Ende eines Bremsgestänges 10 angelenkt. Bei einer Betätigung der Auflaufbremseinrichtung erfolgt somit ein Ziehen des Bremsgestänges 10 in Fahrtrichtung, wodurch die Bremse des Fahrzeuganhängers 2 betätigt wird.

Um die Bremse eines abgekuppelten Fahrzeuganhängers 2 feststellen zu können, ist am Deichselrohr 1 weiterhin ein Handbremshebel 11 angeordnet, der über einen Mitnehmer 12 auf den Umlenkhebel 8 wirkt, so daß bei einem Verschwenken des Handbremshebels 11 im Uhrzeigersinn ebenfalls das Bremsgestänge 10 ziehend betätigt wird.

Um den Handbremshebel 11 in seiner Bremsstellung festhalten zu können, ist er mit einer Klinke 11a versehen, die gemäß Fig. 1 in die Verzahnung einer Rastscheibe 13 eingreift.

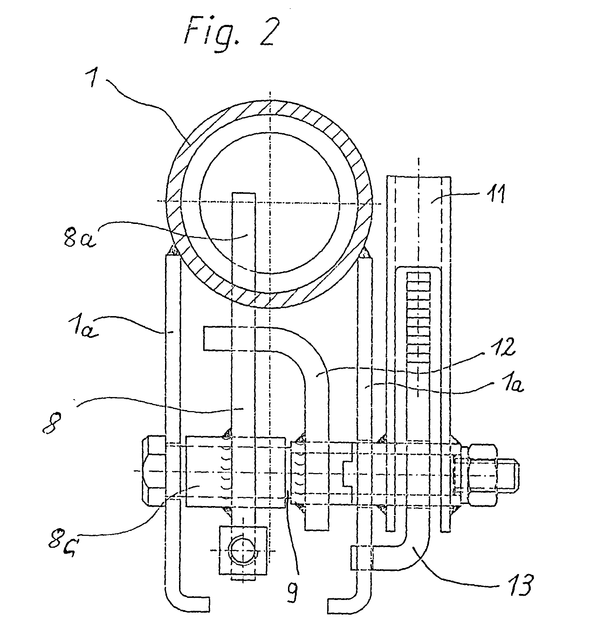

Wie am besten aus Fig. 2 hervorgeht, ist der Lagerbolzen 9 verdrehbar in zwei Gehäuseseitenteilen 1a gelagert, die beim Ausführungsbeispiel das Deichselrohr 1 nach unten verlängern. Im Raum zwischen diesen beiden Gehäuseseitenteilen 1a ist der mit seinem oberen Hebelarm 8a in das Deichselrohr hineinragende Umlenkhebel 8 mittels einer Lagerbuchse 8c verschwenkbar gelagert. Außerhalb des einen Gehäuseseitenteils 1a dient der Lagerbolzen 9 weiterhin der Lagerung des Handbremshebels 11. Zwischen diesen beiden Teilen ist schließlich auf dem Lagerbolzen 9 der Mitnehmer 12 verschwenkbar gelagert, der einerseits unverdrehbar mit dem Handbremshebel 11 verbunden ist und andererseits im Bereich zwischen dem Lagerbolzen 9 und der Anlagefläche des Umlenkhebels 8 für die Zugstange 4 am Umlenkhebel 8 angreift. Beim Ausführungsbeispiel ist der Mitnehmer 12 als separates Bauteil ausgeführt, das in der Art einer Stirnverzahnung formschlüssig mit dem Handbremshebel 11 verbunden ist.

Da auf dem Lagerbolzen 9 nicht nur der Umlenkhebel 8 und der Handbremshebel 11, sondern auch der mit dem Handbremshebel 11 unverdrehbar verbundene und am Umlenkhebel 8 angreifende Mitnehmer 12 gelagert ist, wird die Bodenfreiheit nicht eingeschränkt. Außerdem ergibt sich eine geschützte Unterbringung der für die Bremse des Fahrzeuganhängers 2 wichtigen Teile innerhalb der gehäuseartigen Verlängerung des Deichselrohres 1 mittels der beiden Gehäuseseitenteile 1a.

Die Fig. 1 und 2 zeigen weiterhin, daß unterhalb der Lagerbuchse 8c am Handbremshebel 11 ein sogenanntes Abreißseil 14 angreift, das mit seinem vorderen Ende mit dem Zugfahrzeug verbunden wird und bei einem unerwünschten Lösen der Kupplung zwischen Zugfahrzeug und Fahrzeuganhänger 2 selbsttätig zu einer Betätigung der Bremse des Fahrzeuganhängers 2 führt.

### Bezugszeichenliste:

- 1: Deichselrohr
- 1a: Gehäuseseitenteil
- 2: Fahrzeuganhänger
- 3: Lagergehäuse
- 4: Zugstange
- 5: Kugelkupplung
- 5a: Kupplungshebel
- 6: Schraubenbolzen
- 7: Faltenbalg
- 8: Umlenkhebel
- 8a: oberer Hebelarm
- 8b: unterer Hebelarm
- 8c: Lagerbuchse
- 9: Lagerbolzen
- 10: Bremsgestänge
- 10a: Kupplungsteil
- 11: Handbremshebel
- 11a: Klinke
- 12: Mitnehmer
- 13: Rastscheibe
- 14: Abreißseil

## Patentansprüche

1. Zugeinrichtung für Fahrzeuganhänger mit einer Auflaufbremseinrichtung, die bei einer Relativbewegung zwischen einer mit der Kugelkupplung (5) verbundenen Zugstange (4) und einer Zugdeichsel (1) über einen Umlenkhebel (8) auf ein Bremsgestänge (10) wirkt, und mit einem unabhängig von der Auflaufbremseinrichtung wirkenden Handbremshebel (11), der über einen Mitnehmer (12) auf den Umlenkhebel (8) wirkt, wobei Umlenkhebel (8) und Handbremshebel (11) gemeinsam auf einem Lagerbolzen (9) an der Zugdeichsel (1) gelagert sind,
**dadurch gekennzeichnet**,
daß der Mitnehmer (12) als separates Bauteil ausgebildet und dabei auf dem Lagerbolzen (9) gelagert sowie unverdrehbar mit dem Handbremshebel verbunden ist und daß der Mitnehmer (12) am Umlenkhebel (8) im Bereich zwischen dessen Anlagefläche für die Zugstange (4) und dem Lagerbolzen (9) angreift, der in zwei das Deichselrohr (1) gehäuseartig nach unten verlängernden Seitenteilen (1a) gelagert ist, die den Umlenkhebel (8) und den Mitnehmer (12) umschließen.

## Claims

1. Towing device for vehicle trailers with an overrun braking device that acts via a reversing lever (8) on a brake linkage (10) when there is a relative motion between a towbar (4) connected to the ball-type coupling (5) and a drawbar (1), and with a handbrake lever (11), which acts independently of the overrun braking device and acts via a driver element (12) on the reversing lever (8), the reversing lever (8) and the handbrake lever (11) being mounted jointly on a bearing pin (9) on the drawbar (1), characterized in that the driver element (12) is designed as a separate component and, at the same time, is mounted on the bearing pin (9) and connected nonrotatably to the handbrake lever, and in that the driver element (12) acts on the reversing lever (8) in the region between 'the latter's bearing surface for the towbar (4) and the bearing pin (9), which is mounted in two side parts (la) that extend the drawbar tube (1) downwards in the manner of a housing and surround the reversing lever (8) and the driver element (12).

## Revendications

1. Dispositif de traction destiné à des remorques de véhicules, comportant un dispositif de freinage par inertie qui, lors d'un mouvement relatif entre une barre de traction (4) reliée à l'accouplement à rotule (5) et un timon de traction (1), agit sur la tringlerie de frein (10) par l'intermédiaire d'un levier de renvoi (8), et un levier de frein à main (11) agissant indépendamment du dispositif de freinage par inertie, qui agit sur le levier de renvoi (8) par l'intermédiaire d'un ergot d'entraînement (12), le levier de renvoi (8) et le levier de frein à main (11) étant montés en commun sur un axe de palier (9) du timon de traction (1),
caractérisé en ce que
l'ergot d'entraînement (12) est réalisé sous la forme d'un composant séparé, et est en l'occurrence disposé sur l'axe de palier (9) et relié solidairement au levier de frein à main, et en ce que l'ergot d'entraînement (12) agit sur le levier de renvoi (8) dans la zone située entre sa surface d'appui pour la barre de traction (4) et l'axe de palier (9), qui est logé dans deux parties latérales (la) de type carter prolongeant le tube de timon (1) vers le bas, qui entourent le levier de renvoi (8) et l'ergot d'entraînement (12).
